# EUROPEAN PATENT APPLICATION

(11) **EP 2 157 542 A1**
(43) Date of publication of application: **24.02.2010**
(21) Application number: 09168322.7
(22) Date of filing: 20.08.2009
(51) Int. Cl.: G06Q 40/00

(54) **Converting a trade transaction agreement into allowable structured products**

(30) Priority: 21.08.2008 US 90739 P; 07.08.2009 US 537552
(71) Applicant: YellowJacket, Inc., New York NY 10010 (US)
(72) Inventor: Pechenik, Jacob, New York NY 10012 (US); Campbell, Gregory, Brooklyn NY 11215 (US); Barnes, Blake, New York NY 10002 (US)
(74) Representative: Epping - Hermann - Fischer

(57) **Abstract**

A trade transaction agreement, defined as a basket of one or more structured products, may be converted into one or more structured products. Trade information that represents the trade transaction agreement may be initially provided or specified in various forms, to subsequently be analyzed to construct the trade transaction agreement into its corresponding structured products. The structured products are suitable for submission to post-trade processing facilities for subsequent processing thereof and are accordingly submitted. The structured products may be submitted to a variety of post-trade processing facilities, or one post-trade processing facility may be utilized.

## Description

### CROSS-REFERENCE TO RELATED APPLICATIONS

This Application claims priorities to US Provisional Patent Application No. 61/090,739, entitled "YJ Block™", filed on August 21, 2008 and US Patent Application No. 12/537,552, filed on August 7, 2009, the contents of which are incorporated herein in its entirety.

### TECHNICAL FIELD

The disclosure is generally related to converting a trade transaction agreement into one or more structured products for submission to a post-trade processing facility.

### BACKGROUND

Submission and processing at a post-trade processing facility of a trade transaction agreement between a first party and a second party may be a complicated and time consuming process based upon various features of the trade transaction agreement. For example, trade transaction agreements executed Over-the-Counter (OTC) may often be composed of bundles of "vanilla" products such as a swap, call, or put. Post-trade processing facilities, such as clearing houses, often do not list or accept submission of these complex bundles, instead requiring that the bundles be decomposed prior to submission and submitted as one or more listed products.

Manually submitting the products independently, instead of as a package/bundle, introduces a number of potential problems. First, the submission is time consuming due to the necessity to separate, analyze, and individually submit and process the various components of the transaction agreement. Second, the existing process is highly manual and as such leads to a large number of mistakes due to human error. Third, reconciliation is confusing and complicated because a single trade transaction agreement may necessitate reviewing multiple responses from the post-trade processing facilities.

Thus, a system that easily and efficiently converts a trade transaction agreement for submission to one or more post-trade processing facilities for processing of component parts of the trade transaction agreement is highly desirable.

### SUMMARY

A method for electronically converting a trade transaction agreement into one or more allowable structured products that are suitable for submission to one or more post-trade processing facilities includes electronically receiving trade information that represents the trade transaction agreement between a first party and a second party. The trade transaction agreement is constructed into the one or more allowable structured products, as defined by the one or more post-trade processing facilities. A price value for each is determined so that the sum of the values is equal to a transaction price of the trade transaction agreement. Additionally, a volume for each structured product is determined. Each structured product is electronically submitted to the one or more post-trade processing facilities for processing of the same. Information that identifies at least one of the first party or a representative thereof and the second party or a representative thereof is submitted with each structured product.

In another aspect, a method electronically converts a trade transaction agreement involving one or more structured products that are each suitable for submission to one or more post-trade processing platforms for processing. An interface, from which the trade transaction agreement may be constructed, is provided. A selection of a pre-defined grouping of one or more structured product types for the trade transaction agreement between a first party and a second party is received from the interface. Based on the selected pre-defined grouping, required information for each of the one or more structured products is identified. A subset of the required information is obtained and provided, and the remainder of the information is received from the interface as specified by a user. The trade transaction agreement is thus comprised of the one or more allowable structured products defined by the required information. Each structured product, along with information identifying at least one of the first party or a representative thereof and the second party or a representative thereof, is submitted to the one or more post-trade processing platforms for processing.

Systems for electronically converting a trade transaction agreement into one or more allowable structured products that are suitable for submission to one or more post-trade processing facilities includes a trade transaction software application stored on a server that provides functionality to construct a trade transaction agreement. One or more user third party terminals are coupled to the server, and each terminal includes a data interface for accessing the server and the trade transaction software application.

### BRIEF DESCRIPTION OF THE DRAWINGS

The foregoing summary and the following detailed description are better understood when read in conjunction with the appended drawings. Exemplary embodiments are shown in the drawings, however, it is understood that the embodiments are not limited to the specific methods and instrumentalities depicted herein. In the drawings:

FIG. 1 is a flowchart illustrating a method for electronically converting a trade transaction agreement into one or more allowable structured products that are each suitable for submission to one or more post-trade processing facilities, according to an embodiment.

FIGs. 2a-2b are screenshots illustrating exemplary interfaces for electronically converting a trade transaction agreement into one or more allowable structured products.

FIG. 3 is a flowchart illustrating a method of electronically converting a trade transaction agreement involving one or more allowable structured products that are each suitable for submission to one or more post-trade processing facilities for processing, according to an additional embodiment.

FIGs. 4a-4e are screenshots illustrating exemplary interfaces for electronically converting a trade transaction agreement involving one or more allowable structured products.

FIGs. 5a-5e are screenshots illustrating exemplary interfaces for utilizing optional features, according to various embodiments.

FIG. 6 is a block diagram illustrating a system for electronically converting a trade transaction into one or more allowable structured products and for electronically converting a trade transaction agreement involving one or more allowable structured products, where the structured products are suitable for submission to and processing via one or more post-trade processing facilities, according to various embodiments.

### DETAILED DESCRIPTION

A trade transaction agreement, which may be defined as a basket (i.e., grouping) of one or more structured products, may be, according to various embodiments, converted into the one or more structured products. Trade information that represents the trade transaction agreement may be initially provided or specified in various forms, to subsequently be analyzed to construct the trade transaction agreement from its corresponding structured products. The structured products are suitable for submission to post-trade processing facilities for subsequent processing thereof and are accordingly submitted. The structured products may be submitted to a variety of post-trade processing facilities, or one post-trade processing facility may be utilized. The post-trade processing facilities may include, but are not limited to, clearing houses, trade confirmation facilities, trade settlement facilities, and trade-netting platforms.

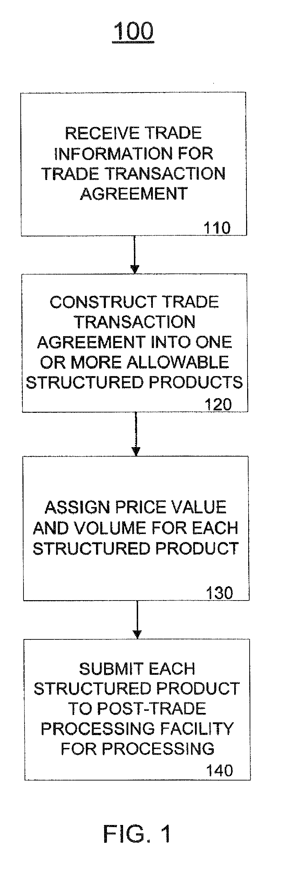

With reference to FIG. 1, a method 100 for electronically converting a trade transaction agreement into one or more allowable structured products that are suitable for submission to one or more post-trade processing facilities, according to an embodiment, is illustrated. One or more computing devices that include a memory for storing instructions and a processor for executing the instructions may be utilized to perform the steps of the method 100.

At 110, trade information for a trade transaction agreement between a first party and a second party is electronically received. The trade information relating to the trade transaction agreement may be represented in various forms without limit. For example, the trade information may be represented as a text-based description which may be in a variety of forms and which is not required to be in a specific form. The trade information, as an additional example, may be represented in an XML message.

At 120, based on the received trade information, the trade transaction agreement is constructed using the one or more allowable structured products as defined by the one or more post-trade processing facilities.

At 130, for each structured product, a price value and a volume are assigned. The sum of the price values equals a transaction price of the trade transaction agreement, the value of which may be specified by a user with the trade information. For example, if the trade information is represented in a text-based description, the text-based description may include a value for the transaction price. Or the value of the transaction may be otherwise and/or separately provided, such as in an XML message, voice message, or text-based description subsequently provided, for example.

At 140, each structured product is electronically submitted to the one or more post-trade processing facilities for processing of the structured products. Information identifying at least one of the first party or a representative thereof and the second party or a representative thereof is submitted with each structured product. Optionally, the one or more post-trade processing facilities may subsequently confirm the processing of each structured product.

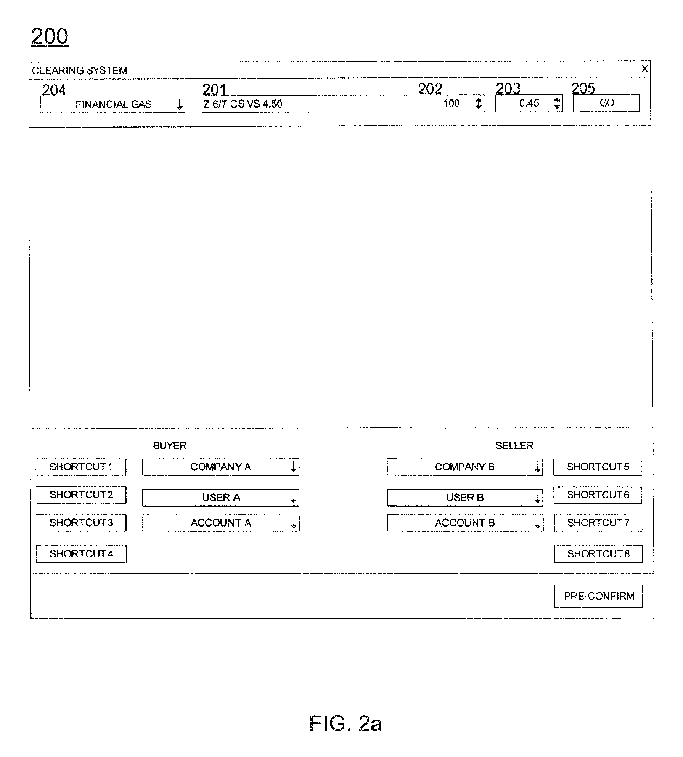

With reference to FIGs. 2a-2b, interfaces are illustrated that may be utilized for electronically converting a trade transaction agreement into one or more allowable structured products. The interfaces of FIGs. 2a-2b are described in the context of when trade information is represented in a text-based description that may not be required to be in a specific format. However, the interfaces may be utilized for various other representations of the trade information, such as, for example, if the trade information is represented in an XML message or other form. The interfaces may be accessed by a user, such as at least one of a first party or a representative thereof, a second party or a representative thereof, and a representative of both the first and second parties such as a broker, for example.

Interface 200, shown in FIG. 2a, includes a field 201 in which the trade information may be entered by a user. The entered trade information may be in the form of a text-based description as shown in field 201. However, the trade information may also be provided in field 201 in various other formats not limited to a text-based description. Additionally, the trade information may be provided in multiple forms, where, for example, one portion is provided in a text-based description and another portion is provided in an XML message and/or a voice message.

Fields 202 and 203 allow for the volume and price to be specified. Field 204 optionally allows for the user to select or otherwise specify a financial product group. Alternatively to a user entering trade information, volume, price, and/or financial product group in fields 201, 202, 203, and 204 of the interface 200, the user may otherwise submit such applicable trade information in various forms via, for example, an API message, an email message, an instant message, a text message, a voice message, or a combination thereof. Alternatively, a subset of information may be provided via the interface 200, while additional subsets of information are provided via one or more separate (i.e., API, email, instant, text, voice) messages.

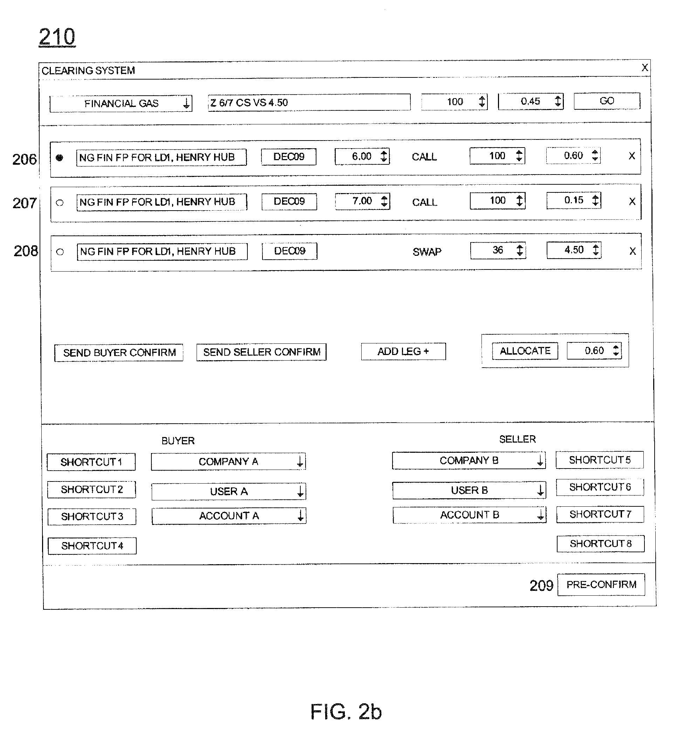

When a user selects go button 205, or when the user otherwise provides the trade information for the trade transaction agreement, the trade transaction agreement is constructed as its one or more allowable structured products, as defined by the one or more post-trade processing facilities, based upon the received trade information as well as the specified volume, price, and/or financial product group. The constructed trade transaction agreement is shown in interface 210 in FIG. 2b, where data rows 206, 207, and 208 represent the structured products that make up the trade transaction agreement. The filled-in circle in row 206 may, for example, represent a buy, where the empty circles in rows 207 and 208 may represent a sell. For each structured product, a price value and a volume are assigned, where the sum of the price values of the structured products equals the specified transaction price of the trade transaction agreement.

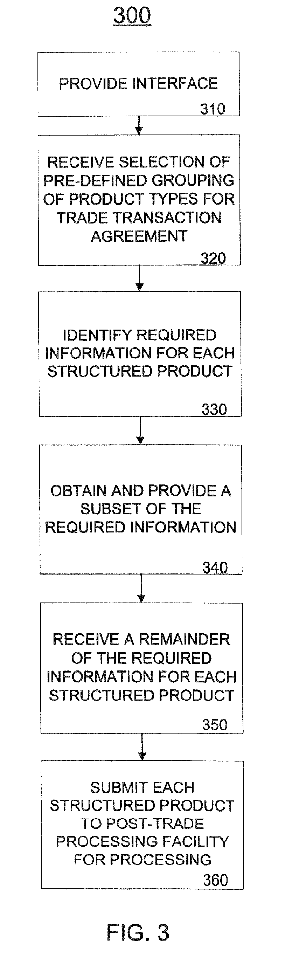

With reference to FIG. 3, a method 300 of electronically converting a trade transaction agreement involving one or more allowable structured products that are each suitable for submission to one or more post-trade processing facilities for processing, according to an additional embodiment, is shown. One or more computing devices that include a memory for storing instructions and a processor for executing the instructions may be utilized to perform the steps of the method 300.

At 310, an interface is provided. The interface allows for a user to convert a trade transaction agreement between a first party and a second party into the structured products by defining or otherwise describing, or assisting in the defining and describing, of the structured products. The first party or a representative thereof the second party or a representative thereof, and/or a representative of both parties may utilize the interface.

At 320, a selection of a pre-defined product grouping of one or more structured product types for the trade transaction agreement is received, as selected or otherwise indicated by the user. The pre-defined product groupings may include a single product type, such as a call, or may include multiple product types, such as a crossed call spread which contains two calls and a swap. Any combination of product groupings may be utilized and defined in various pre-defined groupings.

At 330, required information for each structured product is identified based upon the selected pre-defined product grouping.

At 340, a subset of the required information is obtained and provided. At 350, if the subset of required information related to each structured product obtained and provided at 340 does not provide all of the required information necessary to describe each structured product, then a remainder of the required information related to each structured product is electronically received, via the interface, as specified or otherwise provided by the user (i.e., the first party or representative thereof, the second party or representative thereof, and/or a representative of both).

Thus, the trade transaction agreement includes each of the one or more allowable structured products as defined by the required information, which is obtained and provided based on the selected pre-defined grouping and the remainder of which is received as specified by a user via the interface.

At 360, each structured product, along with information identifying at least one of the first party, or a representative thereof, and the second party, or a representative thereof, is electronically submitted to the one or more post-trade processing facilities for processing. A corresponding confirmation related to the processing of each structured product may optionally be received from the one or more post-trade processing facilities.

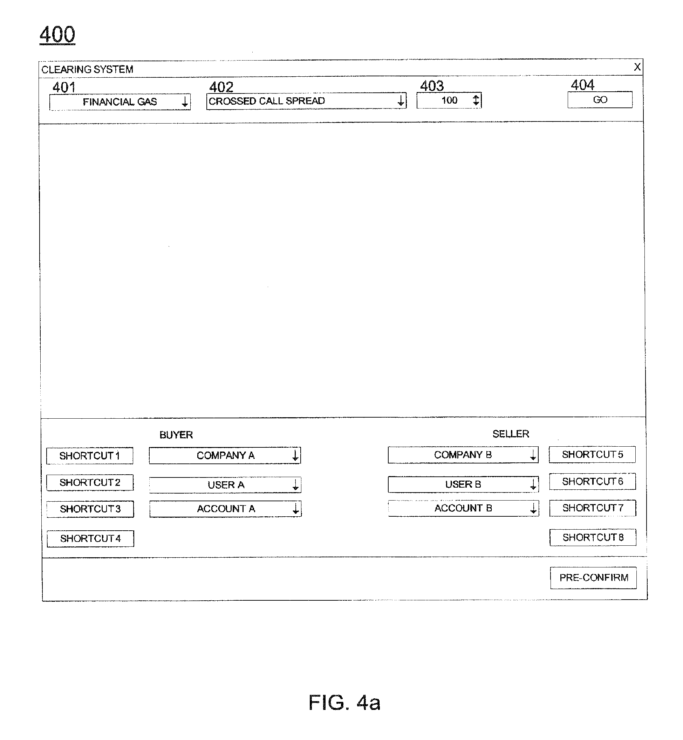

With reference to FIGs. 4a-4e, interfaces are illustrated that may be utilized for electronically converting a trade transaction agreement between a first party and a second party, where the trade transaction agreement involves one or more allowable structured products and where the one or more structured products are built through a selection of a pre-defined grouping.

Interface 400, shown in FIG. 4a, includes selection fields 401, 402, and 403 for allowing a user to select or otherwise specify, respectively, a financial product group, a pre-defined product grouping, and a volume.

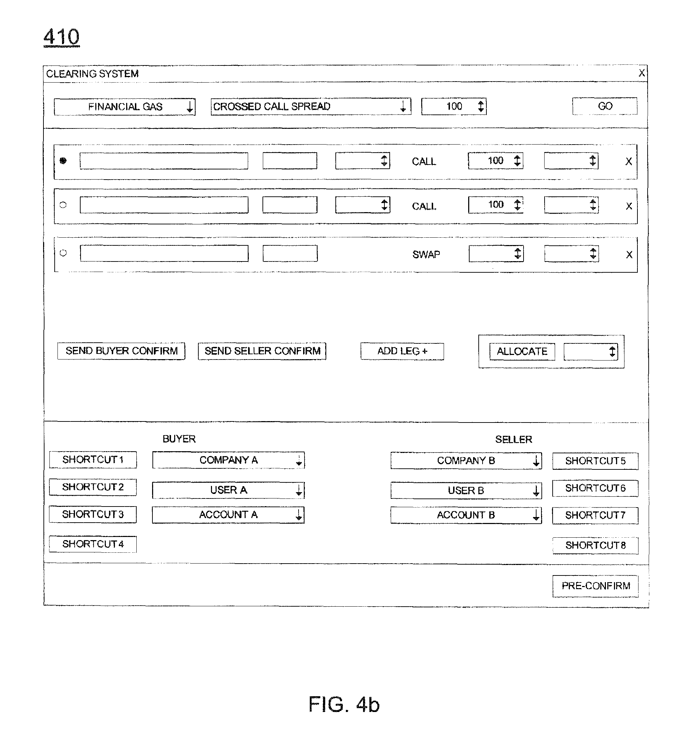

Upon selection by a user of the go button 404, or when the user otherwise submits the trade information for the trade transaction agreement specified in fields 401, 402, and 403, required information for each of the one or more structured products is identified based on the selected pre-defined product grouping. Upon identification, the required information is then populated on the interface 410 illustrated in FIG. 4b.

For example, in interface 400 and field 402, "crossed call spread" is selected as the pre-defined product grouping. This selection indicates that the trade transaction agreement includes two calls and a swap. Thus, fields are created in which information is to be provided (i.e., the required information) related to the structured products of the selected pre-defined product grouping. The fields are illustrated on interface 410 illustrated in FIG. 4b.

Moreover, a subset of the required information may be obtained and accordingly provided in the fields that indicate the required information. Continuing the example illustrated in FIGs. 4a and 4b, a volume of "100" is obtained and provided in the fields corresponding to the two calls. This information (i.e., a subset of the required information) is obtained based on information provided by the user in fields 401, 402, and 403 shown on interface 400 of FIG. 4a. There is no limit as to the type of or amount of the subset of required information that may be obtained and provided. For example, based upon knowledge of the first party and the second party, other information may be obtained and provided in the corresponding fields.

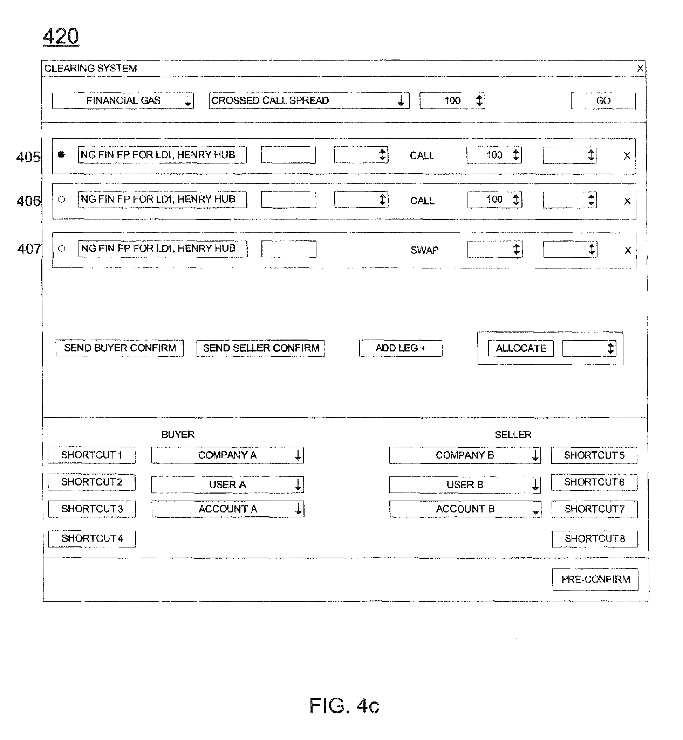

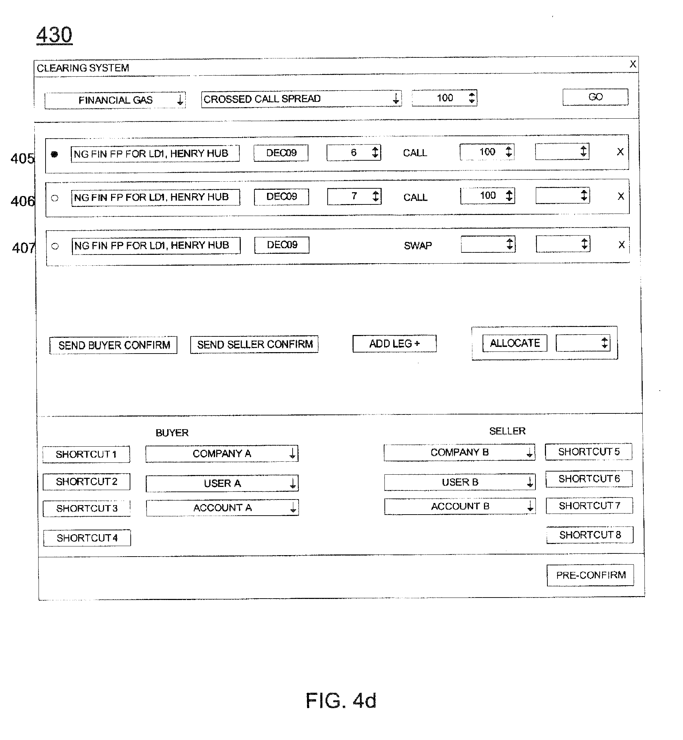

With reference to FIG. 4c and FIG. 4d, interfaces 420 and 430 illustrate product information related to each structured product as specified or otherwise indicated by the user. This information may be considered to be the remainder of the required information. For example, interface 420 of FIG. 4c shows the product specified by the user in rows 405, 406, and 407, while interface 430 of FIG. 4d indicates additional product information (i.e., term/tenure and strike) in each of rows 405, 406, and 407. This information may be entered by the user as a representation of the trade transaction agreement.

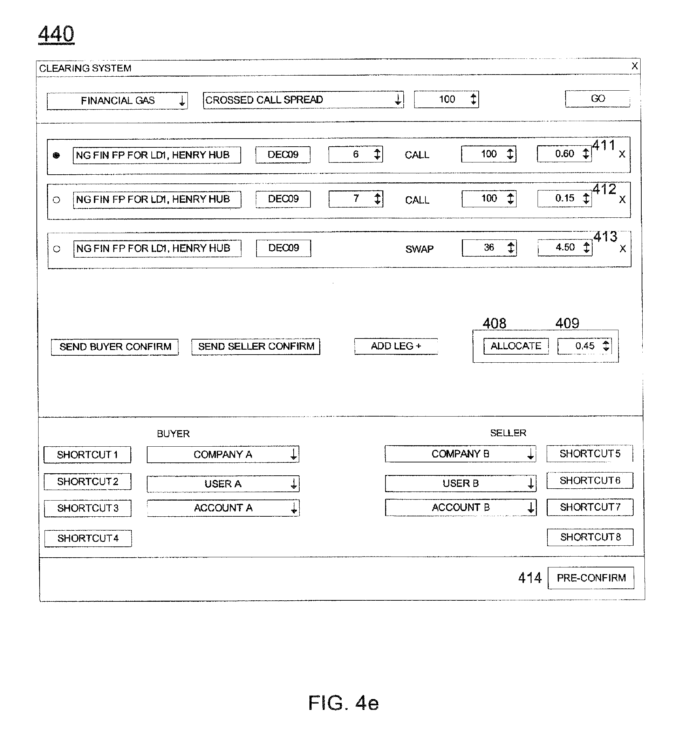

Allocate button 408, as shown in interface 440 of FIG. 4e, may be selected upon specification by the user of a desired price for the trade transaction agreement in field 409. The allocate button 408 completes the construction of the trade transaction agreement as the one or more structured products by allocating a price for each of the structured products, as indicated by fields 411, 412, and 413 in interface 440 of FIG. 4e.

Additional functionality and processing is available whether the trade information is initially provided in various forms, such as in a text-based description or in an XML message, for converting the trade transaction agreement (as described above with respect to FIG. 1 and FIGs .2a-2b) or whether the structured products are defined or otherwise described based upon initial selection of a pre-defined product grouping that represents the trade transaction agreement (as described above with respect to FIG. 3 and FIGs. 4a-4e).

For example, pre-confirmation functionality may be supported in which the constructed trade transaction agreement as the one or more structured products is submitted to the one or more post-trade processing facilities to determine if the one or more structured products are acceptable for processing thereof. Moreover the pre-confirmation functionality may also determine whether either or both the first party and the second party have suitable or adequate credit for the trade transaction agreement

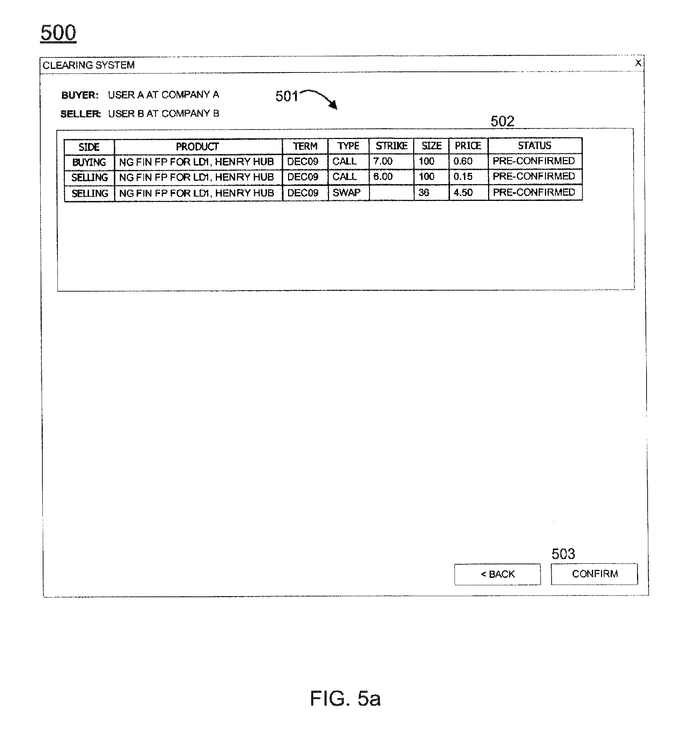

With reference to FIG. 5a that illustrates interface 500, a pre-confirmation status record 501 is provided. The pre-confirmation status record 501 may be provided upon selection of pre-confirm button 209 shown in interface 210 of FIG. 2b or pre-confirm button 414 shown in interface 440 of FIG. 4e. Alternatively, the pre-confirmation functionality may be automatically initiated based upon user and/or system defined settings. A request for a pre-confirmation may identify each structured product individually or as a group

Information related to each of the one or more structured products may be included within the pre-confirm status record 501, and status fields 502 may indicate a status related to each structured product's pre-confirmation. Moreover, a status field may indicate a status related to a pre-confirmation of a group of structured products. In the example shown, each of the three structured products have been "pre-confirmed," indicating that the structured products are allowable for processing as defined by the one or more post-trade processing facilities. If, for example, one or more of the status fields 502 instead indicate "not confirmed" or a similar status, then construction of the trade transaction agreement may be reinitiated. For example, the price value for one or more of the structured products may be reassigned by the user. Moreover, the pre-confirmation functionality may provide a reason as to the "not confirmed" or similar status of the structured products to assist in correcting the pre-confirm status.

Moreover, in an embodiment, a credit check of each of the first party and the second party prior to the submitting of each structured product to the one or more post-trade processing facilities may be initiated and may be part of or separate from the pre-confirmation functionality. The credit check may be desirable and/or necessary to confirm that both parties have adequate credit to complete the trade transaction agreement and/or to confirm that both parties meet certain trading standards and requirements as may be established by the post-trade processing facilities, for example.

An additional functionality may be a confirmation feature in which the constructed trade transaction agreement, comprised of the allowable structured products, is submitted to the one or more post-trade processing facilities. The confirmation feature may be initiated through selection of confirm button 503, illustrated in interface 500 of FIG. 5a. Alternatively, the confirmation feature may be automatically initiated based upon user and/or system defined settings. For example, the confirmation feature may be employed after a certain time period has elapsed following a "pre-confirm" status of each of the one or more structured products.

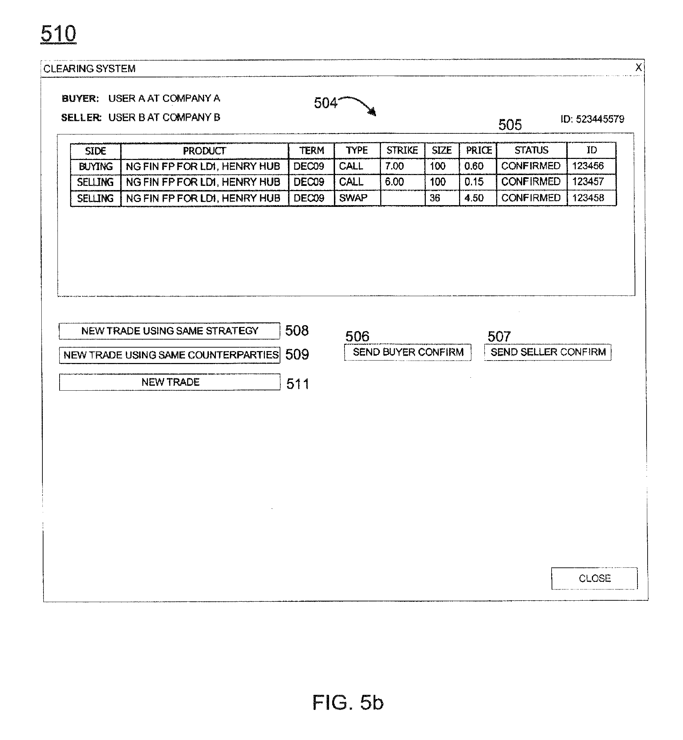

A confirmation record 504 is provided in interface 510 of FIG. 5b. The confirmation record 504 may include information related to each of the one or more structured products. Confirmation status fields 505 may indicate a status related to each structured product's confirmation. In the example shown, each of the three structured products have been "confirmed," indicating that the structured products are successfully processed by the one or more post-trade processing facilities. However, if, for example, one or more of the confirmation status fields 505 instead indicate "not confirmed" or a similar status, then construction of the trade transaction agreement may be reinitiated or the "not confirmed" structured products may be resubmitted. Identification fields, labeled "ID" in the confirmation record 504, indicate an identification number assigned to each structured product, which may be assigned by the respective post-trade processing facility after confirmation. Additionally, an identification number may be assigned to represent the trade transaction agreement.

The confirmation functionality may include a verification that each structured product in a bundle is acceptable by the post-trade processing facility to which it was submitted based on available credit of the first party and the second party or based on restrictions of the post-trade processing facility.

According to an embodiment, processed structured products may be cancelled from processing. Cancelling may, for example, provide an opportunity for the parties to renegotiate and/or resubmit the trade transaction agreement at a later time. The cancelling may automatically occur or may occur if requested within a predetermined time period by the first party, the second party, or a representative thereof. For example, upon receiving the notification in a corresponding confirmation status field 505 that indicates that one or more structured products were not processed, one of the parties or representatives may submit a request to initiate and approve cancellation of all or a portion of the remaining structured products.

Upon submission and/or processing of the one or more structured products that form the trade transaction agreement, further optional features may also be employed. For example, with continued reference to FIG. 5b and interface 510, send buyer confirm button 506 and send seller confirm button 507 may be provided and selected to respectively notify the buyer and/or seller of the processing of each of the one or more structured products. Selection of the send buyer confirm button 506 may produce a buyer confirmation record (not shown) that is transmitted to the buyer and that provides information related to the processing of the one or more structured products from the buyer's point of view. Similarly, selection of the send seller confirm button 507 may produce a seller confirmation record (not shown) that is transmitted to the seller and that provides information related to the processing of the one or more structured products from the seller's point of view. The buyer confirmation record and the seller confirmation record may be transmitted via electronic means, such as but not limited to an instant message, email, text message, voice message, or combination thereof

Buttons 508, 509, and 511, also provided in the interface 510 of FIG. 5b, may be used to conveniently process new trade transaction agreements. Selection of one of buttons 508, 509, and 511 may provide for pre-population of data fields in an interface for converting a trade transaction agreement into one or more allowable structured products. For example, button 508 may automatically lead to interface 410 of FIG. 4b, while button 509 may lead to an automatic designation of parties. Button 511 may create a new trade transaction agreement with little or no specified information, for example interface 200 or interface 400.

Moreover, a new trade transaction agreement may be established based on a previously submitted basket of one or more structured products. At least one of trade information for the new trade transaction agreement, an assigned price value for one or more structured products, an assigned volume for one or more structured products, identifying information related to the first party, and identifying information related to the second party may be provided, via the interface or by other means, to establish the new trade transaction agreement.

Other various operations as requested and/or selected by a user of the confirmation record 504 may be performed. Alternatively, some operations may be automatically initiated based upon pre-configured settings, such as upon "confirmed" status for the one or more structured products.

For example, one or more pieces of information in the confirmation record 504 may be concealed from one or more users, while one or more other pieces of information may be highlighted, both of which may be based upon the pre-configured settings as established by a user or the system.

According to an embodiment, one or more of the structured products identified in the confirmation record 504 may be sorted and/or tagged with identifying information. For example, identifying information, such as an indicator or identifier that may take the form of a symbol or character, may be linked to or associated with a particular structured product.

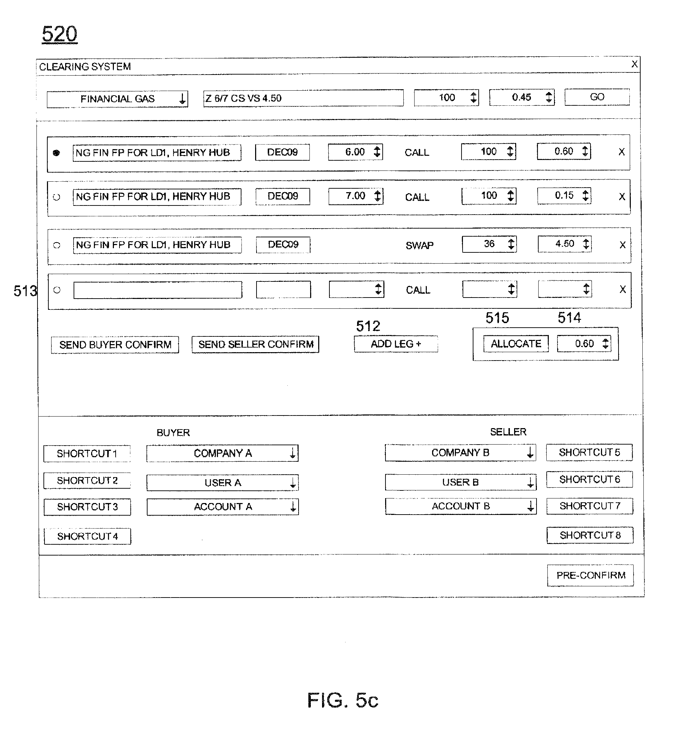

With reference to FIG. 5c and interface 520, an additional feature relates to the ability to add a new structured product. This functionality may be initiated upon selection of add leg button 512, which may be selectable, for example, when the trade transaction agreement is constructed with the previously indicated or known structured products (see, for example, FIG. 2b and FIG. 4e). Upon selection of add leg button 512 or other specification to add a new structured product, an empty data row 513 may be presented. A user may then proceed to provide the necessary structured product information.

An additional features relates to a user's ability to modify one or more of the structured products. For example, with reference to interface 520 of FIG. 5c, the user may adjust or change information related to one or more of the structured products.

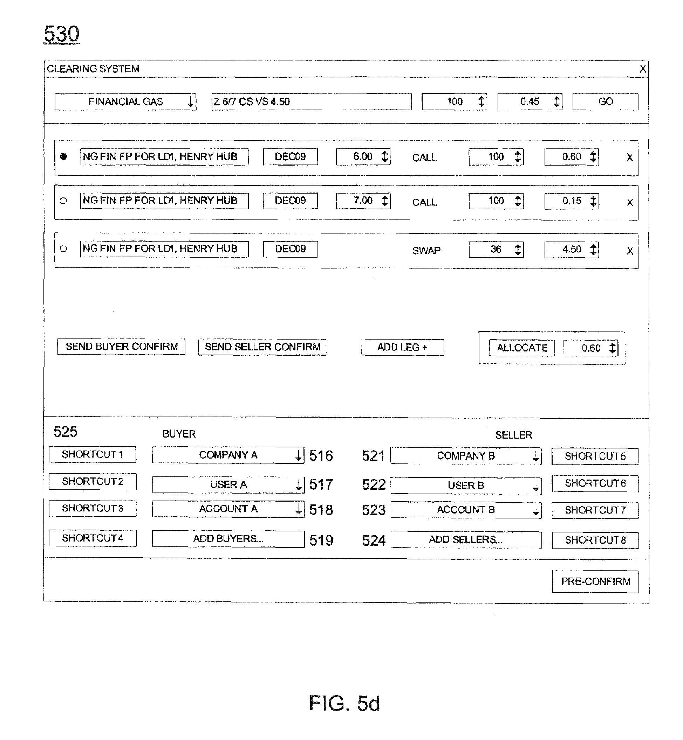

FIG. 5d and interface 530 represent features related to selection of parties for the trade transaction agreement. Data fields 516-518 allow for selection or identification of a company, a user, and an account related to the buyer of the trade transaction agreement, while data fields 521-523 allow for selection or identification of a company, a user, and an account related to the seller. Information in each of the data fields 516-518 or 521-523 may not be required to adequately identify or describe the parties. For example, a buyer may be adequately identified by one or more of the fields 516-518, while a seller may be adequately identified by one or more of the fields 521-523. Selection of or identification in the data fields 516-518 and 521-523 may be performed at various stages of the process of converting the trade transaction agreement as indicated in the interfaces of FIGs. 2a-2b, 4a-4e, and 5c. Moreover, various shortcut buttons 525 may be created and employed to allow for convenient selection of a frequently used, for example, company, user, and/or account. Each shortcut button 525 may be used to specify various amounts of information and are not limited to one type of information or one field. For example, one particular shortcut button 525 may specify a particular account of a particular user within a company.

According to an embodiment, construction of the trade transaction agreement based upon the received trade information may be facilitated by utilizing known information related to the parties. For example, the received trade information may include an abbreviation or other identifier for the first party and/or the second party. By accessing a contact directory of the user, detailed information related to the first party and/or the second party may be obtained. For example, if the trade information is represented in a text-based description, the text may include "BobTrader32," which may be mapped to, through the user's contact directory, a company name, a party name, account number, and other information necessary to identify the party for the trade transaction.

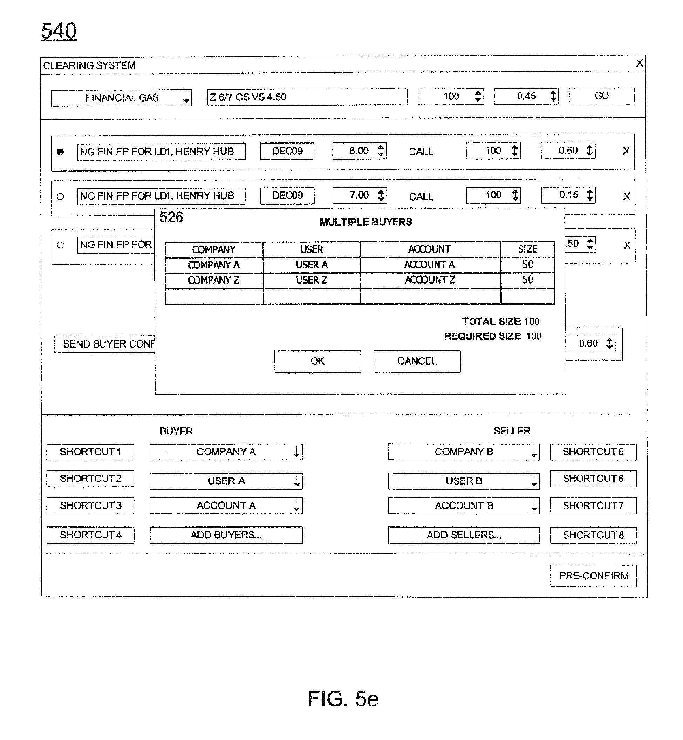

Additionally, add buyer button 519 and add seller button 524 allows for selection and/or identification of multiple buyers and/or sellers. For example, a particular trade transaction agreement may involve two buyers and one seller, in which case the add buyer button 519 may be selected. Upon its selection, window 526, shown in interface 540 of FIG. 5e, may be provided for a user to specify information related to each of the multiple sellers.

According to an embodiment, the received trade information (described with reference to FIG. 1 and FIGs. 2a-2b) or the selected pre-defined grouping of product types (described with reference to FIG. 3 and FIGs. 4a-4e) may represent one or more elements of the trade transaction agreement as negotiated and agreed upon between the first party and the second party. For example, the first and the second party may enter into negotiations and/or discussion related to details of the trade transaction agreement and, upon reaching agreement, may electronically provide the trade information or pre-defined grouping selection for the trade transaction agreement for subsequent processing thereof, as described above.

Each of the one or more structured products may be a type of financial product, which may include but is not limited to a future, a swap, an option, a swaption, or the like. The trade transaction agreement may be an over-the-counter trade, a block trade, an exchange for swap (EFS) trade, an exchange for physical (EFP) trade, an exchange for option (EFO) trade, or the like, for example.

Constructing the trade transaction agreement into its one or more allowable structured products may include a verification that each structured product adheres to product specifications established by the one or more post-trade processing facilities. For example, for a clearing house as the post-trade processing facility, a verification that each structured product is compatible for clearing with the clearing house may be performed. A structured product may be compatible for clearing if the products matches a product as listed by the particular clearing house.

Additionally, requirements related to volume thresholds and/or price ranges may be verified to ensure compliancy. Moreover, if one or more of the structured products are found to not adhere to the product specifications and/or trade requirements, a different price allocation or other remedy may be suggested for the corresponding structured products so that the product specifications and/or trade requirements are accordingly satisfied.

When assigning or allocating a price value for each structured product, restrictions imposed by the post-trade processing facility to which each structured product is submitted may be utilized. Assigning or allocating a price value for each structured product may include utilizing one or more algorithms or pricing models that take into account one or more of current market conditions, market constraints, and market conventions to determine a value that reflects the market for each of the structured products in such a way so that the values in aggregate are consistent with constraints established by the trade transaction agreement from which the structured products were constructed. The algorithms or pricing models may take into account one or more of a value of an underlying asset, a model of the volatility or price movement of an underlying asset, an expiration, and a model of current and future interest rates, for example. Other factors and considerations may also be taken into account.

In submitting each of the one or more structured products, a sequence for submission of the structured products may be determined if the one or more post-trade processing facilities process each structured product individually, as opposed to, for example, processing the products as a bundle. The sequence may be determined to suggest a high likelihood of acceptance of each of the one or more structured products. For example, based upon credit of the first party and/or the second party, one sequence may be more likely to have each structured product accepted than another sequence. Alternatively, if the one or more post-trade processing facilities process the products as a bundle, a verification may be performed to confirm that the bundle will be accepted. The verification may be based upon, for example, credit of at least one of the first party and the second party. The sequence for submission and verification may be performed with the pre-confirm functionality described above with respect to FIG. 5a and interface 500.

A further processing operation may include electronically submitting each structured product with its assigned or allocated price value to the first party, or a representative thereof, and the second party, or a representative thereof, for confirmation related to the structured products and associated price values. This may serve to ensure the accuracy of the trade transaction agreement and may provide an opportunity for both parties and/or representatives to review details related to the trade transaction agreement prior to its actual submission and subsequent processing.

Both the first party and the second party may submit approval of each structured product and its assigned or allocated price value. According to an embodiment, an electronic record of received approvals of each structured product from each of the first party and the second party may be maintained. The submission of approval may, according to an embodiment, be necessary before the method proceeds further. An indication of approval may be sent via an email message, an instant message, a text message, a voice message, or a combination thereof. Alternatively, if approval is not received within a predetermined time period, the methods 100 and 300 of converting a trade transaction agreement may proceed without the approval.

In am embodiment, a communication channel between the first party and the second party to enter into negotiations and/or conversations related to the trade transaction agreement may be established.

Depending upon the structured products that make up the trade transaction agreement, or based upon other considerations related to the structured products and/or the processing of the same, it may be necessary and/or beneficial for more than one clearing house to process the clearing of one or more of the structured products. For example, not all of the structured products may be listed by or be compatible with one clearing house. A structured product may be considered to be compatible with the clearing house if the product matches a product as listed by the clearing house. Thus, according to an embodiment, one or more of the structured products may be transmitted to a different clearing houses or post-trade processing facility for subsequent processing of the one or more structured products.

According to an embodiment, multiple trade transaction agreements may be simultaneously, near-simultaneously, or sequentially processed. A plurality of sets of trade information (in the form of received trade information, such as a text-based description, and/or a selected pre-defined grouping of product types) may be electronically received through, for example, the interface of a computing device as submitted by a first party or a representative thereof, a second party or a representative thereof, or a representative of both parties. The sets of trade information may be created and/or stored within a spreadsheet or other document, which may be electronically transmitted for subsequent processing. The transmission of multiple sets of trade information allows for a submitter of the information to more easily and quickly provide the information necessary for processing. Following the submission of the multiple sets of information, each set may be handled and processed as described above. For example, a price value for each structured product in a trade transaction agreement is assigned and allocated and each structured product is electronically submitted to an applicable post-trade processing facility for processing.

A directory of various parties and representatives may be provided and maintained to allow the parties, representatives, and other users to contact one another with, for example, relevant transaction details. According to an embodiment, each user listed in the directory may have a corresponding identifier. A tag or indicator may be attached or linked to the identifier of a user facilitating a trade transaction agreement. In this manner, the directory indicates the user submitting information related to a specific trade transaction agreement. The tag provides a means to contact the user submitting the information. For example, by selecting a tag next to the identifier of a representative, the representative may be contacted through, for example, a text, email, or voice communication medium. Users added to the directory may include buyers or sellers in a trade transaction agreement or representatives of the buyers or sellers.

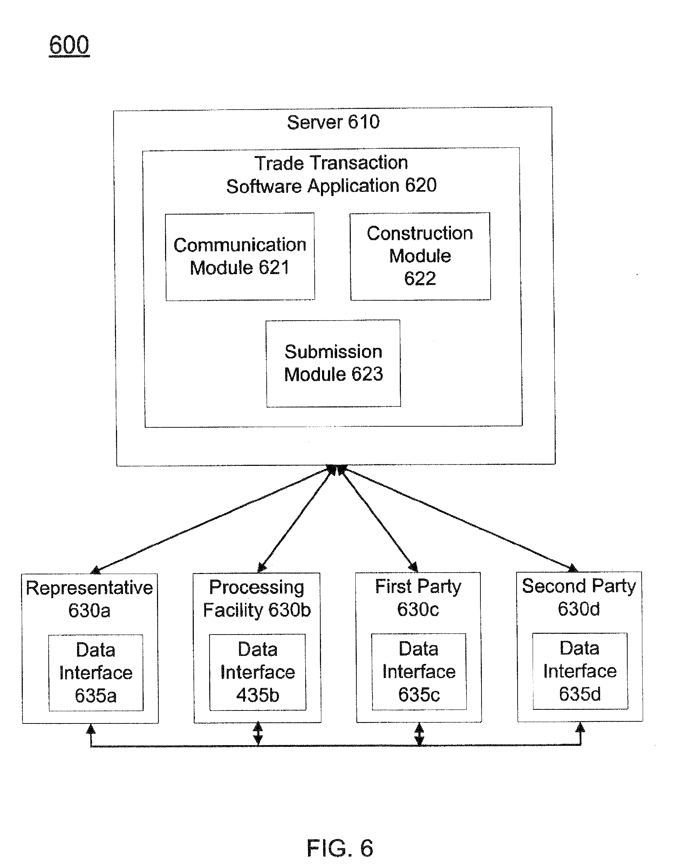

An exemplary system 600 for electronically converting a trade transaction agreement into one or more allowable structured products that are suitable for submission to one or more post-trade processing facilities may include components for performing some or all portions of the above-described methods 100 and 300 and for providing the interfaces and associated functionalities of FIGs. 2a-2b, 4a-4e, and 5a-5e. With reference to FIG. 6, the components may include, for example, a server 610 on which various software applications, such as a trade transaction software application 620, is stored. The system 600 may further include one or more user third party terminals 630 that are coupled to the server 610. The terminals 630 may be coupled to the server 610 through a wired or wireless network, such as, for example, the Internet.

Each third party terminal 630 may include, according to an embodiment, a data interface 635 for accessing the server 610 and the software application 620 stored thereon. Shown in FIG. 6 are four third party terminals 630, including a representative 630a, a post-trade processing facility 630b, a first party 630c, and a second party 630d, respectively including a data interface 635a, 635b, 635c, and 635d. However, the system 600 is not limited to this arrangement, and more or fewer servers 610 and/or third party terminals 630 may be incorporated within the system 600. Moreover, the third party terminals 630 are not limited to certain representatives, post-trade processing facilities, and traders, but may also include other users and entities. The third party terminals 630 may communicate with one another directly via a network, for example, or through the server 610.

The trade transaction software application 620 may, via various modules, provide users with the functionality to convert trade transaction agreements into one or more allowable structured products that are each suitable for submission to a post-trade processing facility. The trade transaction software application 620 may include, but is not limited to, a communication module 621, a constructing module 622, and/or a submission module 623. Each module 621, 622, and 623 may include multiple other modules.

When the software application 620 is executed and accessed via the one or more third party terminals 630, the communication module 621 enables communication, including transfers of information, between the software application 620 and the third party terminals 630. In particular, users of the third party terminals 630 are able to provide, via a data interface 635, for example, trade information that represents a trade transaction agreement between a first party and a second party. In an embodiment, trade information is submitted via one or more of the data interfaces 635. In another embodiment, a pre-defined grouping of one or more structure product types is selected via one or more of the data interfaces 635. The communication module 621 receives the trade information for further processing thereof by the trading transaction software application 620.

The communication module 621 may further operate to provide notifications to users of the third party terminals 630. For example, pre-trade confirmations and post-trade confirmations, including various information related to trade transaction agreements and processing thereof, may be sent from the software application 620 via the communication module 621.

The construction module 622 may evaluate and process information received through the communication module 621 to construct the trade transaction agreement into the one or more allowable structured products. The construction module 622 may assign or allocate a price value for each structured product such that the sum of the price values equals a transaction price of the trade transaction agreement.

The submission module 623 may perform various tasks related to the submission of each structured product. The submission module 623 submits each of the one or more structured products to a post-trade processing facility for processing, such as clearing or trade-netting, of the each structured product.

The various components described herein with respect to the system 600 may include one or more computing devices, hand-held communication devices, mobile computers and/or any other electronic communication means. The components may be described in the general context of comprising computer-executable instructions, such as program modules, being executed by a computer. Generally, program modules may include routines, programs, objects, components, data structures, or the like that perform particular tasks or implement particular abstract data types.

The foregoing examples are provided merely for the purpose of explanation and are in no way to be construed as limiting. While reference to various embodiments are shown, the words used herein are words of description and illustration, rather than words of limitation. Further, although reference to particular means, materials, and embodiments are shown, there is no limitation to the particulars disclosed herein. Rather, the embodiments extend to all functionally equivalent structures, methods, and uses, such as are within the scope of the appended claims.

## Claims

1. A method for electronically converting a trade transaction agreement into one or more allowable structured products that are suitable for submission to one or more post-trade processing facilities, the method comprising:
providing at least one computing device comprising a memory for storing instructions and a processor for executing said instructions, and utilizing said at least one computing device to perform the steps of:
electronically receiving trade information for a trade transaction agreement between a first party and a second party;
constructing the trade transaction agreement into the one or more allowable structured products, as defined by the one or more post-trade processing facilities, based on the received trade information;
for each structured product, assigning a price value and assigning a volume, wherein a sum of the price values equals a transaction price of the trade transaction agreement; and
electronically submitting each structured product with information identifying at least one of the first party, or a representative thereof, and the second party, or a representative thereof, to the one or more post-trade processing facilities for processing of the same.

2. The method of Claim 1, wherein constructing the trade transaction agreement based on the received trade information comprises identifying said one or more structured products based on at least one of the trade information and information related to at least one of the first party, or a representative thereof, and the second party, or a representative thereof

3. The method of Claim 2, wherein information related to at least one of the first party, or a representative thereof, and the second party, or a representative thereof, is obtained through a contact directory.

4. The method of Claim 1, wherein the trade information relating to the trade transaction agreement is represented in a text-based description.

5. The method of Claim 1, wherein assigning a price value for each structured product comprises utilizing restrictions imposed by the post-trade processing facility to which each structured product is submitted.

6. The method of Claim 1, wherein assigning a price value for each structured product comprises utilizing one or more algorithms or pricing models that take into account one or more of current market conditions, market constraints, and market conventions to determine a value that reflects the market for each of the one or more structured products such that the values in aggregate are consistent with constraints established by the trade transaction agreement from which the structured products were constructed.

7. The method of Claim 6, wherein the algorithms and pricing models further take into account one or more of a value of an underlying asset, a model of the volatility or price movement of an underlying asset, an expiration, and a model of current and future interest rates.

8. The method of Claim 1, wherein the trade information is received via one or more of an API message, an email message, an instant message, a text message, and a voice message.

9. A method of electronically converting a trade transaction agreement involving one or more allowable structured products that are each suitable for submission to one or more post-trade processing platforms for processing, the method comprising:
providing at least one computing device comprising a memory for storing instructions and a processor for executing said instructions, and utilizing said at least one computing device to perform the steps of:
providing an interface;
electronically receiving, via the interface, a selection of a pre-defined grouping of one or more structured product types for the trade transaction agreement between a first party and a second party;
identifying, based on the selected pre-defined grouping, required information for each of the one or more structured products;
obtaining and providing a subset of the required information;
electronically receiving, via the interface, a remainder of the required information related to each structured product, wherein the trade transaction agreement is comprised of the one or more allowable structured products, each structured product defined by the required information; and
electronically submitting each structured product with information identifying at least one of the first party, or a representative thereof, and the second party, or a representative thereof, to the one or more post-trade processing platforms for processing.

10. The method of Claim 9, further comprising allocating a price value for each structured product, wherein a sum of the price values equals a transaction price of the trade transaction agreement.

11. The method of Claim 10, wherein allocating a price value for each structured product comprises utilizing restrictions imposed by the post-trade processing facility to which each structured product is submitted.

12. The method of Claim 10, wherein allocating a price value for each structured product comprises utilizing one or more algorithms or pricing models that take into account one or more of current market conditions, market constraints, and market conventions to determine a value that reflects the market for each of the one or more structured products such that the values in aggregate are consistent with constraints established by the trade transaction agreement from which the structured products were constructed.

13. The method of Claim 12, wherein the algorithms and pricing models further take into account one or more of a value of an underlying asset, a model of the volatility or price movement of an underlying asset, an expiration, and a model of current and future interest rates.

14. The method of Claim 1 or 9, wherein the one or more post-trade processing facilities comprise one or more of a clearing house, a confirmation facility, a settlement facility, or a trade-netting platform, and wherein the processing of each structured product by the one or more post-trade processing facilities respectively comprises one or more of clearing, confirming, settling, or trade-netting.

15. The method of Claim 1 or 9, wherein the trade transaction agreement comprises at least one of an over-the-counter trade, a block trade, an exchange for swap (EFS) trade, an exchange for physical (EFP) trade, and an exchange for option (EFO) trade.

16. The method of Claim 1 or 9, wherein the one or more allowable structured products are defined as allowable by the one or more post-trade processing facilities based on satisfying requirements related to at least one of volume thresholds and price ranges.

17. The method of Claim 1 or 9, further comprising:
initiating a pre-confirmation functionality comprising electronically submitting a pre-confirmation request identifying each structured product individually or as a group with information identifying at least one of the first party, or a representative thereof, and the second party, or a representative thereof, to the one or more post-trade processing facilities; and
receiving from the one or more post-trade processing facilities an indication, for each structured product individually or for the group, as to whether the corresponding structured products are acceptable for processing, an indication as to whether credit of the first party and the second party is adequate, or a combination thereof.

18. The method of Claim 17, further comprising creating a pre-confirmation status record with, for each structured product individually or for the group, one or more fields that include the indication as to whether the corresponding structured product is acceptable for processing, the indication as to whether credit of the first party and the second party is adequate, a reason related to unacceptability, or a combination thereof.

19. The method of Claim 1 or 9, further comprising:
initiating a submission functionality comprising electronically submitting each structured product to the one or more post-trade processing facilities; and
receiving from the one or more post-trade processing facilities a confirmation indication, for each structured product, as to whether each of the one or more structured products is successfully processed.

20. The method of Claim 19, wherein the confirmation indication from the one or more post-trade processing facilities indicates one or more structured products were not processed, the method further comprising one of:
canceling a remainder of the structured products that were processed; or
resubmitting the one or more structured products that were not processed.

21. The method of Claim 19, further comprising creating a confirmation record with, for each structured product, a field that includes the confirmation indication as to whether the corresponding structured product is successfully processed.

22. The method of Claim 1 or 9, further comprising verifying that each structured product in a bundle is acceptable by the post-trade processing facility to which it was submitted based on available credit of the first party and the second party or based on restrictions of the post-trade processing facility.

23. The method of Claim 1 or 9, further comprising determining a sequence of the one or more structured products for submission to the one or more post-trade processing facilities in the determined sequence, wherein the determined sequence suggests a high likelihood of acceptance of each of the one or more structured products.

24. The method of Claim 1 or 9, wherein each of the one or more structured products comprises a financial product, wherein the financial product comprises a future, a swap, an option, or a swaption, or a combination thereof.

25. The method of Claim 1 or 9, further comprising:
establishing a new trade transaction agreement by electronically receiving, based on a previously submitted basket of one or more structured products, at least one of trade information for the new trade transaction agreement, an assigned price value for one or more structured products, an assigned volume for one or more structured products, identifying information related to the first party, and identifying information related to the second party.

26. The method of Claim 1 or 9, further comprising:
adding a new structured product as specified by a user.

27. The method of Claim 1 or 9, further comprising:
modifying one or more of the structured products as specified by a user.

28. The method of Claim 1 or 9, further comprising:
adding multiple buyers and/or multiple sellers for the trade transaction agreement as specified by a user.

29. The method of Claim 1 or 9, further comprising:
electronically receiving a plurality of sets of trade information, each set related to a trade transaction agreement;
for each set of trade information for a corresponding trade transaction agreement, constructing the trade transaction agreement into one or more allowable structured products, as defined by the one or more post-trade processing facilities, based on the received trade information.

30. A system for electronically converting a trade transaction agreement into one or more allowable structured products that are suitable for submission to one or more post-trade processing facilities, the system comprising:
a trade transaction software application stored on a server, said software application providing functionality to convert trade transaction agreements; and
one or more user third party terminals coupled to the server, said third party terminals comprising a data interface for accessing the server and the trade transaction software application stored thereon;
wherein the trade transaction software application, when executed, causes the server to:
receive trade information for a trade transaction agreement between a first party and a second party;
construct the trade transaction agreement into the one or more allowable structured products, as defined by the one or more post-trade processing facilities, based on the received trade information;
for each structured product, assign a price value and assign a volume, wherein a sum of the price values equals a transaction price of the trade transaction agreement; and
submit each structured product with information identifying at least one of the first party, or a representative thereof, and the second party, or a representative thereof, to the one or more post-trade processing facilities for processing of the same.

31. The system of Claim 30, wherein the server constructing the trade transaction agreement based on the received trade information comprises the server identifying said one or more structured products based on at least one of the trade information and information related to at least one of the first party, or a representative thereof, and the second party, or a representative thereof.

32. The system of Claim 30, wherein the trade information relating to the trade transaction agreement is represented in a text-based description.

33. The system of Claim 30, wherein the server assigning a price value for each structured product comprises the server utilizing restrictions imposed by the post-trade processing facility to which each structured product is submitted.

34. The system of Claim 30, wherein the server assigning a price value for each structured product comprises the server utilizing one or more algorithms or pricing models that take into account one or more of current market conditions, market constraints, and market conventions to determine a value that reflects the market for each of the one or more structured products such that the values in aggregate are consistent with constraints established by the trade transaction agreement from which the structured products were constructed.

35. A system for electronically converting a trade transaction agreement involving one or more allowable structured products that are each suitable for submission to one or more post-trade processing platforms for processing, the system comprising:
a trade transaction software application stored on a server, said software application providing functionality to convert trade transaction agreements; and
one or more user third party terminals coupled to the server, said third party terminals comprising an interface for accessing the server and the trade transaction software application stored thereon;
wherein the trade transaction software application, when executed, causes the server to:
electronically receive, via the interface, a selection of a pre-defined grouping of one or more structured product types for the trade transaction agreement between a first party and a second party;
identify, based on the selected pre-defined grouping, required information for each of the one or more structured products;
obtain and provide a subset of the required information;
electronically receive, via the interface, a remainder of the required information related to each structured product, wherein the trade transaction agreement is comprised of the one or more allowable structured products, each structured product defined by the required information; and
electronically submit each structured product with information identifying at least one of the first party, or a representative thereof, and the second party, or a representative thereof, to the one or more post-trade processing platforms for processing.

36. The system of Claim 35, wherein the trade transaction software application, when executed, further causes the server to allocate a price value for each structured product, wherein a sum of the price values equals a transaction price of the trade transaction agreement.

37. The system of Claim 36, wherein the server allocating a price value for each structured product comprises the server utilizing restrictions imposed by the post-trade processing facility to which each structured product is submitted.

38. The system of Claim 36, wherein the server allocating a price value for each structured product comprises the server utilizing one or more algorithms or pricing models that take into account one or more of current market conditions, market constraints, and market conventions to determine a value that reflects the market for each of the one or more structured products such that the values in aggregate are consistent with constraints established by the trade transaction agreement from which the structured products were constructed.

39. The system of Claim 30 or 35, wherein the trade transaction software application, when executed, further causes the server to:
initiate a pre-confirmation functionality comprising electronically submitting a pre-confirmation request identifying each structured product individually or as a group with information identifying at least one of the first party, or a representative thereof, and the second party, or a representative thereof, to the one or more post-trade processing facilities; and
receive from the one or more post-trade processing facilities an indication, for each structured product individually or for the group, as to whether the corresponding structured products are acceptable for processing, an indication as to whether credit of the first party and the second party is adequate, or a combination thereof.

40. The system of Claim 30 or 35, wherein the trade transaction software application, when executed, further causes the server to verify that each structured product in a bundle is acceptable by the post-trade processing facility to which it was submitted based on available credit of the first party and the second party or based on restrictions of the post-trade processing facility.
